# EUROPEAN PATENT APPLICATION

(11) **EP 4 234 076 A1**
(43) Date of publication of application: **30.08.2023**
(21) Application number: 22211619.6
(22) Date of filing: 06.12.2022
(51) Int. Cl.: B01F 35/21, B01F 23/231, C02F 1/72, C02F 3/20, C02F 3/26, C02F 7/00, B63G 8/42, B63B 35/68, B63B 35/32, E02B 15/08, E02B 15/06

(54) **MICROBUBBLE RELEASING ARRANGEMENT FOR OXYGENATING A BODY OF WATER**

(30) Priority: 28.02.2022 SE 2250274
(71) Applicant: ECOMB Ocean Recycle AB, 151 02 Södertälje (SE)
(72) Inventor: HAGSTRÖM, Ulf, 611 92 Nyköping (SE)
(74) Representative: Kransell & Wennborg KB

(57) **Abstract**

The present disclosure relates to a microbubble releasing arrangement (20) for releasing microbubbles of oxygen in a body of water in which the microbubble releasing arrangement is submerged. The microbubble releasing arrangement comprises a plurality of microbubble diffusers (22), each diffuser formed of a flexible tubing having perforations for releasing microbubbles therefrom. The arrangement also comprises a rigid manifold (1) connected to each of the diffusers (22) and arranged for distributing oxygen gas thereto. The arrangement also comprises a gas tube (21) for connecting the manifold to an oxygen source for providing the oxygen gas to the manifold. The arrangement also comprises a pressure sensor (7) fastened to the manifold and arranged for sensing an ambient pressure outside of the manifold.

## Description

### TECHNICAL FIELD

The present disclosure relates to a microbubble releasing arrangement, and method and a system for oxygenating a body of water.

### BACKGROUND

There is a general problem in many bodies of water, e.g. lakes and seas such as the Baltic Sea, with too low oxygen levels particularly in some parts of the body of water e.g. at some areas of the bottom. Systems for oxygenating water bodies today are costly and typically stationary whereby the oxygen may not be added to the part of the water body where it is most needed.

Also, a common problem with lakes and oceans is eutrophication, including an excess of nitrogen, phosphorus and organic compounds dissolved or suspended in the bodies of water.

### SUMMARY

It is an objection of the present invention to provide improved addition of oxygen to a body of water, while also removing compounds leading to eutrophication of the body of water.

According to an aspect of the present invention, there is provided a microbubble releasing arrangement for releasing microbubbles of oxygen in a body of water in which the microbubble releasing arrangement is submerged. The microbubble releasing arrangement comprises a plurality of microbubble diffusers, each diffuser formed of a flexible tubing having perforations for releasing microbubbles therefrom. The microbubble releasing arrangement also comprises a rigid manifold connected to each of the diffusers and arranged for distributing oxygen gas thereto. The microbubble releasing arrangement also comprises a gas tube connecting the manifold to an oxygen source for providing the oxygen gas to the manifold. The microbubble releasing arrangement also comprises a pressure sensor fastened to the manifold and arranged for sensing an ambient pressure outside of the manifold.

According to another aspect of the present invention, there is provided a method of oxygenating a body of water using an embodiment of the microbubble releasing arrangement of the present disclosure. The method comprises obtaining, e.g. from the pressure sensor, information enabling a determination of an ambient pressure at the microbubble releasing arrangement submerged in the body of water. The method also comprises, based on the obtained information, adjusting an oxygen pressure of an oxygen flow within the microbubble releasing arrangement, e.g. such that the oxygen pressure is within the range of 0.5-2 bar above the ambient pressure.

According to another aspect of the present invention, there is provided a system for oxygenating a body of water. The system comprises at least one instance of an embodiment of the microbubble releasing arrangement of the present disclosure. The system also comprises the oxygen source. The system also comprises a floatable device, e.g. in the form of a boat or pram. The system also comprises a winch fastened to the floatable device and having a wire or the like which is connected to the manifold such that the microbubble releasing arrangement hangs from the wire outside of the floatable device and in the body of water, for adjusting a depth at which the microbubble releasing arrangement is submerged in the body of water. The system also comprises a controller arranged to automatically adjust an oxygen pressure of an oxygen flow within the microbubble releasing arrangement based on received information about the ambient pressure sensed by the pressure sensor, e.g. such that the oxygen pressure is within the range of 0.5-2 bar above the ambient pressure.

By adding oxygen in the form of microbubbles, i.e. bubbles having a diameter of at most 50 micrometres (µm), improved transfer of the oxygen molecules from the gas phase in the bubble to the liquid phase of the ambient body of water, dissolved in said body of water, e.g. lake or sea, by the increased area of the interface between the gas phase and the liquid phase. An advantage of using oxygen (O₂) instead of air is that oxygenation is improved while nitrogen is not added to the water, nitrogen often being already present in the water in undesirably high levels. Also, by adjusting the pressure of the oxygen flow in the manifold and/or the diffusers in view of the ambient pressure of the body of water at the manifold, outside of the manifold, sensed by the pressure sensor fastened to the (typically outside of the) manifold, the size of the microbubbles can be adjusted to be large enough that they reach the surface of the body of water (i.e. the interface between the body of water and the air above it).

There are at least two reasons for the desire of allowing the microbubbles to reach the surface, i.e. to not be so small that they are completely dissolved in the water before reaching the surface.

One reason is that gases, other than oxygen, which are dissolved in the water can enter the bubbles to be released to the air in gas form when the bubbles reach the surface. Examples of such dissolved gases include nitrogen (N2) and hydrogen sulphide (H2S), which if they are dissolved to a high degree of saturation in the water may easily migrate into the bubble and transition to gas form. The levels of such dissolved undesirable gases may thus be reduced in the water. Typically, a bubble reaching the surface will have the same pressure distribution of different gases as the water through which it has travelled. Thus, if the water is 100% saturated with N2 and 100% saturated with O₂, the bubble will contain 78% N₂ and 21% O₂, but if the saturation of O₂ is less than 100% in the water, the N2 level in the bubble will be higher and the O₂ level lower thus improving the levels of both N2 (lower) and O₂ (higher) in the water. Carbon dioxide (CO₂) may however be difficult to extract from the water since it is highly soluble therein.

Another reason is that organic compounds, e.g. proteins and fats, or microplastics, which may be dissolved or suspended in the water, can follow the bubbles to the surface e.g. to form a foam or layer on the surface. This is because such compounds may comprise a hydrophobic end which is attracted to the bubble in view of the relatively polar environment of the water. At the surface, the organic compounds may be collected and removed from the body of water, e.g. by means of a boom.

It is thus advantageous to be able to adjust the pressure of the oxygen flow in the microbubble releasing arrangement in view of the ambient pressure of the body of water at the manifold or diffusers, where the microbubbles are released into the body of water. When adjusting the pressure, a trade-off may be taken account of, between producing bubbles large enough to reach the surface and not larger than necessary which would release some of the oxygen to the air instead of allowing it to be dissolved in the water.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic view in longitudinal section of a manifold, in accordance with some embodiments of the present invention.
Fig 2 is a schematic top view of a microbubble releasing arrangement, in accordance with some embodiments of the present invention.
Fig 3 is a schematic side view of a microbubble diffuser, in accordance with some embodiments of the present invention.
Fig 4 is a schematic side view of a system for oxygenating a body of water, in accordance with some embodiments of the present invention.
Fig 5 is a schematic block diagram of a controller of a system for oxygenating a body of water, in accordance with some embodiments of the present invention.
Fig 6 is a schematic flow chart of a method in accordance with some embodiments of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

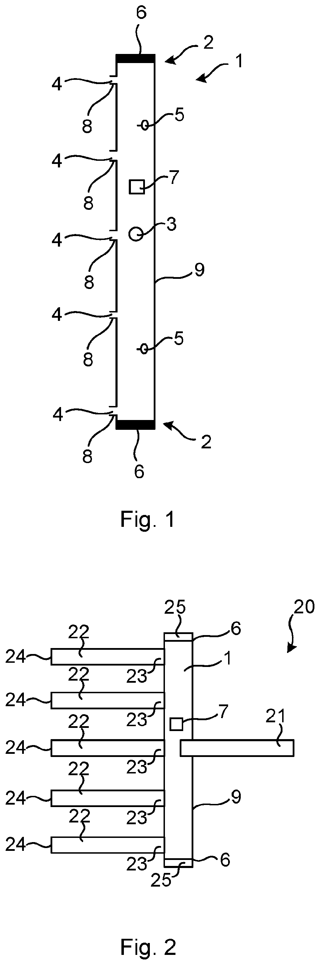

Figure 1 illustrates a manifold 1, typically of a rigid material e.g. a metal such as steel. The manifold is preferably in the form of a, typically straight, elongated tube having two ends 2. The elongated tube of the manifold 1 may have a length within the range of 5-50 m, preferably 5-10 m. The manifold 1 is provided with a tube opening 3 over which the gas tube can be attached for providing pressurized oxygen to the manifold. The tube opening 3 may be through a lateral wall 9 of the manifold, preferably in the middle between the two ends 2. The manifold 1 is provided with a plurality of diffuser openings 4, one per diffuser to be attached to the manifold, each diffuser opening 4 provided with a nozzle 8 for attaching a respective diffuser to each diffuser opening. Typically, the diffuser openings 4 are provided through a lateral wall 9 of the manifold 1, typically at an angle within the range of 90-180°, e.g. at an angle of 90°, to the tube opening 3. In some embodiments, the lateral diffuser openings 4 are, e.g. equidistantly, longitudinally aligned along the manifold 1, implying that the diffuser openings 4 are arranged in a row following a straight line parallel to a longitudinal axis of the manifold 1, wherein the manifold is formed as a rigid straight tube, e.g. having a right circular cylindrical shell forming the lateral wall 9 of the manifold. The manifold may be designed for reduced drag when moved through the body of water.

A pressure sensor 7 is fastened to the manifold, typically to the outside of the lateral wall 9 of the manifold 1, for sensing the ambient pressure outside of the manifold.

The manifold 1 may comprise wire attaching means 5, e.g. at least two wire attaching means 5 at different longitudinal positions along the lateral wall 9 of the manifold, to either side of the middle thereof, to enable holding the manifold horizontally when submerging it in a body of water hanging from, or being pulled by, wire(s), or the like, attached to the wire attaching means.

The manifold 1 may comprise, e.g. at each of its ends 2, a mechanical fastener 6, e.g. comprising threads, for removably fastening a weight 25 (see figure 2) to the end 2 of the manifold 1. The weight(s) 25 may be used to reduce the buoyancy of the manifold, and the thereto attached diffusers, resulting from the oxygen gas therein. It is desired that the weights 25 are heavy enough to ensure that the manifold sinks such that it hangs from the wire attached to its wire attaching means 5 when the manifold is submerged in the body of water. Since the mechanical fasteners 6 allows the weights to be removably fastened thereto, the mass of the weights 25 may be selected based on the depths at which the manifold 1 is intended to be operated at and/or the salinity of the water it is submerged in.

Figure 2 illustrates a microbubble releasing arrangement 20 comprising a manifold 1, e.g. as discussed in relation to figure 1, a gas tube 21, typically a flexible gas tube 21, connected to the manifold 1 over the tube opening 3 for supplying pressurized oxygen in gas form from a oxygen source to the manifold, and a plurality of microbubble diffusers 22 (here five diffusers 22), each connected over a respective diffuser opening 4 by means of its nozzle 8 (e.g. screwed on to threads of the nozzle 8. By means of the manifold 1, oxygen gas, at an overpressure, from the gas tube 21 is distributed, preferably evenly, to each of the diffusers 22 connected to the manifold.

Each diffuser has a fixed end 23 fastened to the manifold 1 and a free end 24, distal to the manifold 1. Oxygen gas flows from the manifold 1 into each diffuser 22 at its fixed end and is then released as microbubbles from the diffuser along the whole length of the diffuser, from the fixed end 23 to the free end 24. Any number of diffusers 22 may be attached to the manifold 1, e.g. within the range of 3-100, or 10-100, diffusers 22.

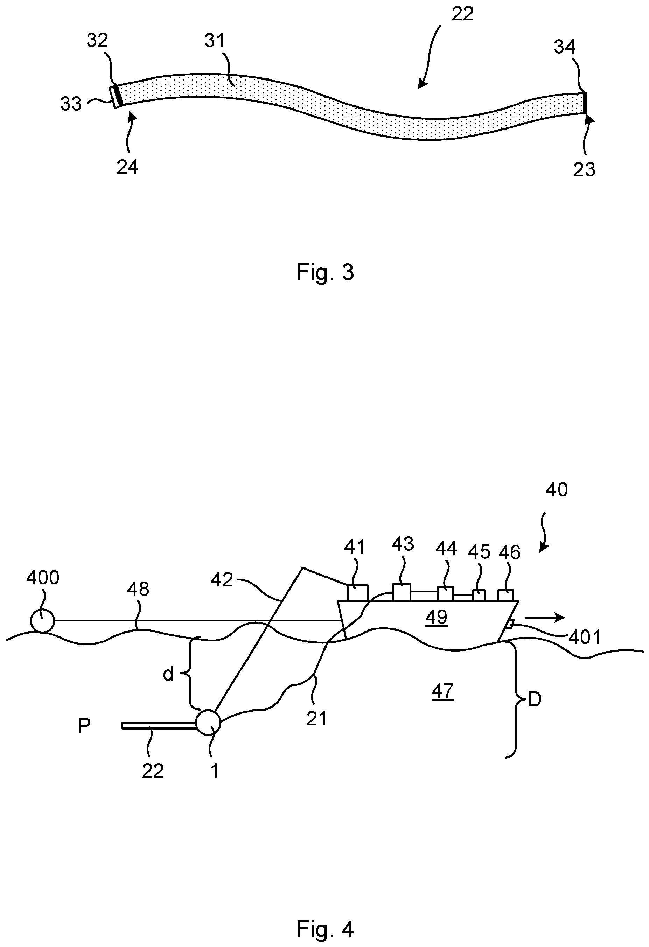

Figure 3 illustrates a microbubble diffuser 22, having a fixed end 23 and a free end 24. The fixed end 23 may be provided with a fastener 34, e.g. comprising threads, for fastening the diffuser 22 to a nozzle 8 of the manifold 1. The diffuser 22 may typically be in the form of a flexible tubing having perforations 31 for releasing microbubbles from inside the diffuser into the body of water surrounding the diffuser, when the microbubble releasing arrangement 20 is in use. For this to be achieved, there has to be an overpressure of oxygen gas within the diffuser compared with the ambient pressure in the body of water, as sensed by the pressure sensor 7. The overpressure inside the diffuser maybe up to 2 bar, e.g. within the range of 0.5-2 bar. To prevent intake of water into the diffusers in case the overpressure is too low, e.g. if an oxygen flow sensor in the microbubble releasing arrangement indicates that the flow of oxygen has stopped, the microbubble releasing arrangement may be raised in or from the body of water e.g. by the wire attaching means 5.

In some embodiments, the diffuser 22 may have a length of the tubing within the range of 2-100 m, e.g. within the range of 3-10 m. Additionally or alternatively, in some embodiments, the diffuser 22 has an outer diameter of the tubing within the range of 15-25 mm, preferably within the range of 18-20 mm, and/or an inner diameter of the tubing within the range of 10-20 mm, preferably within the range of 12-15 mm. Additionally or alternatively, in some embodiments, the diffuser 22 has a number of perforations within the range of 1 000-120 000 perforations per meter of tubing. For example, the diffuser 22 may be or comprise the microbubble diffuser OXYPRAX^{™} from Bubbletech or SOLVOX^{™} diffusion hoses from Linde.

To prevent the free end 24 of the diffuser 22 from raising/floating due to the oxygen gas in the diffuser tubing, a weight 33 may be attached to the free end 24, e.g. via a mechanical fastener 32, e.g. comprising threads, for removably fastening the weight 33 to the free end 24. Since the mechanical fastener 32 allows the weight 33 to be removably fastened thereto, the mass of the weight 33 may be selected based on the depths at which the diffuser 22 is intended to be operated at and/or the salinity of the water it is submerged in.

Figure 4 illustrates a system 40 for oxygenating a body of water 47. The system 40 comprises a floatable device, e.g. a boat or pram, which may be movable as indicated by the horizontal arrow in the figure to pull the microbubble releasing arrangement 20 submerged in the body of water behind the floatable device. A winch 41 is fastened to the floatable device 49 and has a wire/chain/rope or the like 42, herein exemplified as a wire 42, which is connected to the manifold 1 of the microbubble releasing arrangement 20, e.g. connected to the wire attaching means 5. Thus, the microbubble releasing arrangement 20 hangs from the wire outside of the floatable device 49 and in the body of water 47, possibly being pulled by the floatable device 49. The winch 41 is able to adjust a depth d at which the microbubble releasing arrangement is submerged in the body of water. The depth d typically depends on both the length of the wire 42 extended from the winch 41 and the speed, e.g. within the range 1-3 knots, with which the floatable device 49 moves over the body of water 47. The ambient pressure P, sensed by the pressure sensor 7 of the microbubble releasing arrangement 20 depends on the depth d, and the pressure of the oxygen flow to the microbubble releasing arrangement 20 via the gas tube 21 is adjusted in accordance there with as discussed herein.

The gas tube 21 is connected to the oxygen source 43, typically on the floating device 49. The oxygen source comprises an oxygen tank, which may e.g. be filled with liquid oxygen when the system 40 is close to land. However, handling liquid oxygen and filling the oxygen tank may be difficult and subject to strict safety regulations. Thus, in some embodiments, the system 40 may comprise an oxygen generator 44, typically also on the floatable device 49 and connected to (in fluid connection with) the oxygen source 43, for providing oxygen to the oxygen source, e.g. by means of Pressure Swing Adsorption (PSA) for extracting oxygen from air or by means of an electrolyzer where the resulting hydrogen may be stored for later use. If the oxygen tank is arranged for holding oxygen in liquid form, which may be preferred, there may also be an evaporator arranged with the oxygen tank in the oxygen source 43 for converting the liquid oxygen in the tank to gas form to flow through the gas tube 21. For holding the oxygen in liquid form, the pressure in the oxygen tank may be at least 17 bar, e.g. about 17 bar.

In some embodiments, the system also comprises an electricity generator 45, typically on the floatable device 49, for generating electricity for the operation of the system, e.g. including for powering the oxygen generator 44. The electricity generator 45 preferably produces electricity from renewable energy sources e.g. by comprising at least one wind turbine and/or at least one solar panel.

In some embodiments, the system comprises a containment boom 400, e.g. an adsorption boom, for collecting foam formed at a surface 48 of the body of water 47 from organic compounds, such as microplastics, proteins and/or fats, brought to the surface by the microbubbles. The boom 400 may float on the body of water 47 and may e.g. be connected to and pulled by the floatable device 49 when the floatable device is in motion.

In some embodiments, the system 40 comprises a depth sensor 401, e.g. being or comprising a sonar, for sensing a depth D of the body of water 47 (typically the distance D from the surface 48 of the body of water to a bottom of the body of water). The winch may then be controlled, e.g. by the controller 46, to adjust the depth d of the microbubble releasing arrangement 20 based on the received depth information about the depth D sensed by the depth sensor 401.

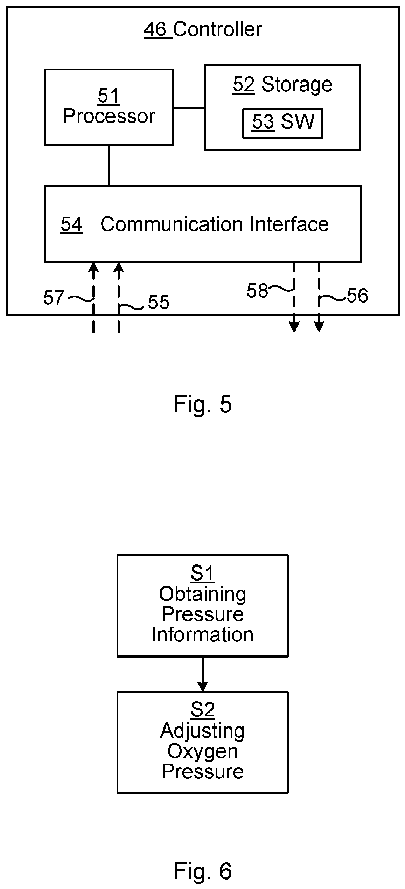

Figure 5 illustrates the controller 46 which is also schematically shown on the floatable device 49 in figure 4. In some embodiments, the controller 46 is arranged to automatically adjust an oxygen pressure of an oxygen flow within the microbubble releasing arrangement 20 based on received information 55 about the ambient pressure P sensed by the pressure sensor 7, e.g. such that the oxygen pressure is within the range of 0.5-2 bar above the ambient pressure. A communication interface 54 of the controller 46 may thus receive a signal 55 comprising the information about the ambient pressure P, and the communication interface may then, in response to the received signal 55, send a control signal to e.g. a compressor or oxygen generator or evaporator of the oxygen source 43 to automatically adjust the pressure of the oxygen flow through the gas tube 21. Additionally or alternatively, in some embodiments, the controller 46 is arranged to receive depth information 57 about the depth D sensed by the depth sensor 401 and to control the winch 41 to adjust the depth d of the microbubble releasing arrangement 20 based on the received depth information. The communication interface 54 of the controller 46 may thus receive a signal 57 comprising the information about the depth D sensed by the depth sensor 401, and the communication interface may then, in response to the received signal 57, send a control signal to the winch 41 to automatically adjust the depth d of the microbubble releasing arrangement 20.

The controller 46 comprises processing circuitry 51 e.g. a central processing unit (CPU). The processing circuitry 51 may comprise one or a plurality of processing units in the form of microprocessor(s). However, other suitable devices with computing capabilities could be comprised in the processing circuitry 51, e.g. an application specific integrated circuit (ASIC), a field programmable gate array (FPGA) or a complex programmable logic device (CPLD). The processing circuitry 51 is configured to run one or several computer program(s) or software (SW) 53 stored in a storage 52 of one or several storage unit(s) e.g. a memory. The storage unit is regarded as a computer readable means 52, forming a computer program product together with the SW 53 stored thereon as computer-executable components and may e.g. be in the form of a Random Access Memory (RAM), a Flash memory or other solid state memory, or a hard disk, or be a combination thereof. The processing circuitry 51 may also be configured to store data in the storage 52, as needed. The controller 46 also comprises the communication interface 54 discussed above. The method of the present disclosure may be performed by the controller 46.

Thus, in some embodiments of the present invention, there is provided a computer program product 52 comprising computer-executable components 53 for causing the controller 46 to perform an embodiment of the method of the present disclosure when the computer-executable components are run on processing circuitry 51 comprised in the controller.

Figure 6 illustrates some embodiments of the method of the present disclosure. The method is for oxygenating a body of water 47 using an embodiment of the microbubble releasing arrangement 20 of the present disclosure. The method comprises obtaining Si, e.g. from the pressure sensor 7, information enabling a determination of the ambient pressure P at the microbubble releasing arrangement 20 submerged in the body of water 47. Then, the method also comprises, based on the obtained Si information, adjusting S2 an oxygen pressure of an oxygen flow within the microbubble releasing arrangement 20 (for instance in the gas tube 21, the manifold 1 or any of the diffusers 22, preferably in the diffuser), e.g. such that the oxygen pressure is within the range of 0.5-2 bar above the ambient pressure P.

In some embodiments, the pressure of the oxygen flow is adjusted S2 such that when microbubbles are released into the body of water 47 from the oxygen flow in the microbubble releasing arrangement 20, the microbubbles have a diameter within the range of 1-50 µm, preferably within the range of 1-10 µm, when released, preferably allowing the released microbubbles to reach a surface 48 of the body of water. If the microbubbles are released deeper in the body of water, they may need to have a larger diameter when released in order to reach the surface 48, i.e. to not be completely dissolved into the body of water on the way up to the surface.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A microbubble releasing arrangement (20) for releasing microbubbles of oxygen in a body of water (47) in which the microbubble releasing arrangement is submerged, the microbubble releasing arrangement comprising:
a plurality of microbubble diffusers (22), each diffuser formed of a flexible tubing having perforations (31) for releasing microbubbles therefrom;
a rigid manifold (1) connected to each of the diffusers (22) and arranged for distributing oxygen gas thereto;
a gas tube (21) for connecting the manifold (1) to an oxygen source (43) for providing the oxygen gas to the manifold; and
a pressure sensor (7) fastened to the manifold (1) and arranged for sensing an ambient pressure (P) outside of the manifold.

2. The microbubble releasing arrangement of claim 1, wherein each of the microbubble diffusers (22) has a length of the tubing within the range of 2-100 m, preferably within the range of 3-10 m.

3. The microbubble releasing arrangement of any preceding claim, wherein each of the microbubble diffusers (22) has an outer diameter of the tubing within the range of 15-25 mm, preferably within the range of 18-20 mm, and/or an inner diameter of the tubing within the range of 10-20 mm, preferably within the range of 12-15 mm.

4. The microbubble releasing arrangement of any preceding claim, wherein the perforations (31) are in an amount within the range of 1 000-120 000 perforations per meter of the tubing.

5. The microbubble releasing arrangement of any preceding claim, wherein the plurality of microbubble diffusers (22) consists of from 5 to 20 microbubble diffusers.

6. The microbubble releasing arrangement of any preceding claim, wherein the manifold (1) is an elongated tube;
wherein each of the microbubble diffusers (22) is connected to the manifold over respective lateral openings (4) through a lateral wall (9) of the elongated tube, wherein the lateral openings are, e.g. equidistantly, longitudinally aligned along the manifold (1).

7. The microbubble releasing arrangement of claim 6, wherein each of the ends (2) of the tubular manifold (1) is provided with a mechanical fastener (6), e.g. comprising threads, for removably fastening a weight (25) to the end of the manifold.

8. The microbubble releasing arrangement of any preceding claim, wherein each of the microbubble diffusers (22) is, at its free end (24), provided with a mechanical fastener (32), e.g. comprising threads, for removably fastening a weight (33) to said free end.

9. A method of oxygenating a body of water (47) using the microbubble releasing arrangement (20) of any preceding claim, the method comprising:
obtaining (Si), e.g. from the pressure sensor (7), information enabling a determination of an ambient pressure (P) at the microbubble releasing arrangement (20) submerged in the body of water (47); and
based on the obtained (Si) information, adjusting (S2) an oxygen pressure of an oxygen flow within the microbubble releasing arrangement (20), e.g. such that the oxygen pressure is within the range of 0.5-2 bar above the ambient pressure (P).

10. The method of claim 9, wherein the pressure of the oxygen flow is adjusted (S2) such that when microbubbles are released into the body of water (47) from the oxygen flow in the microbubble releasing arrangement (20), the microbubbles have a diameter within the range of 1-50 µm, preferably within the range of 1-10 µm, when released, preferably allowing the released microbubbles to reach a surface (48) of the body of water.

11. A system (40) for oxygenating a body of water (47), the system comprising:
at least one microbubble releasing arrangement (20) according to any claim 1-8;
the oxygen source (43);
a floatable device (49), e.g. in the form of a boat or pram;
a winch (41) fastened to the floatable device and having a wire (42) which is connected to the manifold (1) such that the microbubble releasing arrangement (20) hangs from the wire outside of the floatable device and in the body of water (47), for adjusting a depth (d) at which the microbubble releasing arrangement is submerged in the body of water; and
a controller (46) arranged to automatically adjust an oxygen pressure of an oxygen flow within the microbubble releasing arrangement (20) based on received information (55) about the ambient pressure (P) sensed by the pressure sensor (7), e.g. such that the oxygen pressure is within the range of 0.5-2 bar above the ambient pressure.

12. The system of claim 11, further comprising an oxygen generator (44) for providing oxygen to the oxygen source (43), e.g. by means of Pressure Swing Adsorption, PSA, for extracting oxygen from air.

13. The system of claim 12, further comprising an electricity generator (45), e.g. comprising at least one wind turbine and/or at least one solar panel, for powering the oxygen generator (44).

14. The system of any claim 11-13, further comprising at least one containment boom (400), e.g. an adsorption boom, for collecting foam formed at a surface (48) of the body of water (47) from organic compounds, such as microplastics, proteins and/or fats, brought to the surface by the microbubbles.

15. The system of any claim 11-14, further comprising a depth sensor (401), e.g. a sonar, for sensing a depth (D) of the body of water (47), the controller (46) being further arranged to receive depth information (57) about the depth (D) sensed by the depth sensor (401) and to control the winch (41) to adjust the depth (d) of the microbubble releasing arrangement (20) based on the received depth information.
